# FASCICULE DE BREVET EUROPEEN

(11) **EP 2 619 863 B1**
(45) Date de publication et mention de la délivrance du brevet: **16.07.2014**
(21) Numéro de dépôt: 11757888.0
(22) Date de dépôt: 20.09.2011
(51) Int. Cl.: H02B 13/055

(54) **APPAREIL DE COUPURE D'UN COURANT ELECTRIQUE DE MOYENNE OU HAUTE TENSION ET SON PROCEDE DE FABRICATION**
MITTEL- ODER HOCHSPANNUNGS SCHALTGERÄT UND HERSTELLUNGSVERFAHREN
MEDIUM OR HIGH-VOLTAGE SWITCHING DEVICE AND METHOD OF FABRICATING THE SAME

(30) Priorité: 22.09.2010 FR 1057603
(43) Date de publication de la demande: 31.07.2013
(60) Demande divisionnaire: 13177719.5
(73) Titulaire: Schneider Electric Energy France, 92500 Rueil-Malmaison (FR)
(72) Inventeur: KIEFFEL, Yannick, F-38440 Saint Jean De Bournay (FR); PICCOZ, Daniel, F-69480 Lucenay (FR); GIRODET, Alain, F-69680 Chassieu (FR)
(74) Mandataire: Ilgart, Jean-Christophe
(86) Numéro de dépôt international: PCT/EP2011/066351
(87) Numéro de publication internationale: WO 2012/038442

(56) Documents cités:
- FR-A1- 2 930 019
- US-A1- 2008 135 817

## Description

### DOMAINE TECHNIQUE

La présente invention se rapporte à un appareil de coupure d'un courant électrique (aussi appelé appareil électrique de connexion/déconnexion) pour la moyenne tension, dans lequel l'extinction des arcs électriques susceptibles de se produire est assurée par un milieu gazeux qui présente des propriétés d'extinction d'arc électrique comparables, voire supérieures, à celles de l'hexa-fluorure de soufre (SF₆) tout en ayant un impact sur l'environnement faible ou nul.

Elle se rapporte également à un procédé de fabrication de cet appareil.

Dans ce qui précède et ce qui suit, les termes « moyenne tension » et « haute tension » sont utilisés dans leur acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

L'appareil de coupure d'un courant électrique selon l'invention peut notamment être un disjoncteur, un interrupteur, un combiné interrupteur-fusibles, un sectionneur, un sectionneur de mise à la terre ou un contacteur.

### ÉTAT DE LA TECHNIQUE ANTÉRIEURE

Dans les appareils de coupure d'un courant électrique de moyenne ou haute tension, la coupure de courant est typiquement obtenue par la séparation de contacts électriques et la formation entre ces contacts d'un arc électrique sur lequel est soufflé un fluide diélectrique qui permet de refroidir cet arc et d'entraîner son extinction.

Actuellement, le fluide diélectrique le plus souvent utilisé dans les appareils de coupure est un gaz, à savoir le SF₆.

Ce gaz présente, en effet, une rigidité diélectrique relativement haute, une bonne conductivité thermique et des pertes diélectriques peu élevées. Il est de plus chimiquement inerte, ininflammable, non toxique pour l'homme et les animaux et son prix est, encore aujourd'hui, modéré.

Un autre de ses avantages réside dans le fait que les espèces moléculaires et ioniques, qui se forment lorsqu'il est ionisé à l'état de plasma par un arc électrique, se recombinent rapidement et presque totalement, une fois cet arc électrique éteint, pour redonner du SF₆. Il en résulte que la quantité de SF₆, qui est initialement présente à l'état gazeux dans un appareil électrique de coupure, reste stable ou quasi stable dans le temps.

Toutefois, le SF₆ a pour inconvénient majeur de présenter un potentiel de réchauffement global (PRG) de 23 900 (relativement au CO₂ sur 100 ans) et une durée de séjour dans l'atmosphère de 3 200 ans, ce qui lui vaut d'être inscrit par le Protocole de Kyoto (1997) sur la liste des gaz dont les émissions doivent être limitées.

Or, le meilleur moyen de limiter les émissions de SF₆ est encore de limiter son utilisation en général et son utilisation dans des appareils de coupure en particulier.

Des mélanges de SF₆ et d'azote sont utilisés pour limiter l'impact du SF₆ sur l'environnement. En effet, l'ajout de SF₆, par exemple à hauteur de 10 à 20% volumiques, permet d'améliorer significativement la rigidité diélectrique de l'azote qui, en tension alternative (50 Hz), est sensiblement trois fois plus faible que celle du SF₆.

Néanmoins, du fait du fort PRG du SF₆, le PRG de ces mélanges reste très élevé. Ainsi, par exemple, un mélange constitué de SF₆ et d'azote, dans un rapport volumique de 10/90, présente encore un PRG de l'ordre de 8 650.

De tels mélanges ne sauraient donc être considérés comme des milieux gazeux à faible impact environnemental.

Il en est de même des perfluorocarbones qui présentent, d'une manière générale, des propriétés diélectriques intéressantes mais dont les PRG s'inscrivent typiquement dans une gamme allant de 5 000 à 10 000 (6 500 pour CF₄, 7 000 pour C₃F₈ et C₄F₁₀, 8 700 pour c-C₄F₈, 9 200 pour C₂F₆).

Récemment, il a été proposé de remplacer le SF₆ par le trifluoroiodométhane (CF₃I) (Nakauchi et al., XVI International Conference on Gas Discharge and their Applications, Chine, 11-15 septembre 2006, **[1]).** En effet, le CF₃I présente une rigidité diélectrique supérieure à celle du SF₆ et ce, aussi bien en champ homogène qu'en champ hétérogène, pour un PRG inférieur à 5 et une durée de séjour dans l'atmosphère de 0, 005 année.

Malheureusement, outre que le CF₃I est cher, il possède une valeur moyenne d'exposition (VME) de l'ordre de 3 à 4 ppm et est classé parmi les substances cancérigènes, mutagènes et reprotoxiques (CMR) de catégorie 3, ce qui est rédhibitoire pour une utilisation à une échelle industrielle.

Par ailleurs, les appareils de coupure dans lesquels l'extinction d'arc électrique est assurée par de l'huile présentent l'inconvénient majeur d'exploser en cas de non coupure ou de défaut interne.

Les appareils de coupure dans lesquels l'extinction d'arc électrique est assurée par l'air ambiant sont généralement de grandes dimensions, coûteux et sensibles à l'environnement (humidité, pollution) tandis que les appareils de coupure, notamment du type interrupteurs-sectionneurs, à ampoule à vide sont très onéreux et, de ce fait, très peu présents sur le marché. Le document US 2008/135817 divulgue un appareil de coupure comprenant un milieux gazeux avec au moins une fluorocétone.

Compte tenu de ce qui précède, les Inventeurs se sont donc fixé pour but de fournir un appareil de coupure d'un courant élèctrique de moyenne ou haute tension, dans lequel l'extinction des arcs électriques susceptibles de se produire est assurée par un fluide diélectrique qui, tout en présentant un pouvoir d'extinction d'arc électrique comparable, voire supérieur, à celui du SF₆, ait un impact sur l'environnement faible ou nul.

Ils se sont aussi fixé pour but que ce fluide diélectrique ne soit pas toxique pour l'homme et les animaux.

Ils se sont encore fixé pour but que ce fluide diélectrique ait un coût compatible avec son utilisation dans la fabrication d'appareils de coupure à une échelle industrielle.

### EXPOSÉ DE L'INVENTION

Ces buts et d'autres encore sont atteints par l'invention qui propose, en premier lieu, un appareil de coupure d'un courant électrique de moyenne tension, qui comprend une enceinte étanche dans laquelle se trouvent des composants électriques ainsi qu'un milieu gazeux assurant l'extinction des arcs électriques susceptibles de se produire dans cette enceinte, et qui est caractérisé en ce que :
- le milieu gazeux comprend au moins une fluorocétone, seule ou en mélange avec au moins un gaz n'appartenant pas à la famille des fluorocétones ;
- la fluorocétone est présente dans l'enceinte partiellement à l'état liquide et partiellement à l'état gazeux ; et en ce que
- l'enceinte comprend de plus des moyens pour absorber les espèces moléculaires qui se forment après l'ionisation que subit cette fluorocétone au cours d'un arc électrique.

Il se trouve, en effet, que, dans le cadre de leurs travaux, les Inventeurs ont constaté que les fluorocétones, qui ne sont pas toxiques, qui se dégradent très rapidement dans l'atmosphère en raison de la sensibilité aux ultraviolets que présente la double liaison du groupe cétone -C=O qu'elles contiennent et qui ont, de ce fait, un PRG proche de 1, présentent, à l'état gazeux, des propriétés d'extinction d'arc électrique particulièrement intéressantes et sont, à ce titre, susceptibles de remplacer très avantageusement le SF₆ dans des appareils de coupure d'un courant électrique.

Toutefois, ils ont également constaté que les fluorocétones ne présentent pas, après ionisation à l'état de plasma, une capacité à se reconstituer analogue à celle que présente le SF₆ et qu'en conséquence, la quantité de fluorocétone(s), qui est initialement présente à l'état gazeux dans un appareil de coupure d'un courant électrique, diminue au fur et à mesure que le nombre de coupures réalisées par cet appareil augmente.

Aussi, pour surmonter ce problème supplémentaire, l'invention prévoit :
- d'une part, de placer une « source » de fluorocétone gazeuse dans l'enceinte de l'appareil de coupure, cette source étant représentée par la fraction de fluorocétone qui est présente à l'état liquide dans cette enceinte et qui va partiellement se vaporiser en fluorocétone gazeuse lorsque la pression partielle de la fraction de fluorocétone qui, elle, est présente à l'état gazeux dans l'enceinte va diminuer après la survenue d'un arc électrique du fait de l'incapacité que présente cette fluorocétone à se reconstituer une fois ionisée par cet arc électrique ; et
- d'autre part, de piéger les espèces moléculaires qui se forment après ionisation de la fluorocétone de manière à ce que la formation de ces espèces n'induise pas une augmentation trop importante de la pression totale qui règne dans l'enceinte et, donc, une diminution trop importante de la fraction de fluorocétone qui est présente à l'état gazeux dans cette enceinte.

Conformément à l'invention, la fluorocétone est, de préférence, choisie parmi les fluorocétones ayant un nombre total d'atomes de carbone allant de 3 à 8, ces fluorocétones pouvant comprendre une ou plusieurs fonctions cétones.

Plus encore, on préfère choisir la fluorocétone parmi les fluorocétones qui répondent à la formule brute CₙF₂ₙO dans laquelle n est un nombre entier allant de 3 à 8.

En pratique, ces fluorocétones sont :
- la fluorocétone de formule brute C₃F₆O et de formule semi-développée CF₃-CO-CF₃, qui sera appelée plus simplement C3K dans ce qui suit ;
- la fluorocétone de formule brute C₄F₈O et de formule semi-développée CF₃-CO-CF₂-CF₃, qui sera appelée plus simplement C4K dans ce qui suit ;
- la fluorocétone de formule brute C₅F₁₀O et de formule semi-développée CF₃-CO-CF-(CF₃)₂, qui sera appelée plus simplement C5K dans ce qui suit ;
- la fluorocétone de formule brute C₆F₁₂O et de formule semi-développée CF₃-CF₂-CO-CF-(CF₃)₂, qui sera appelée plus simplement C6K dans ce qui suit ;
- les fluorocétones de formule brute C₇F₁₄O et de formules semi-développées CF₃-CF₂-CF₂-CO-CF₂-CF₂-CF₃, CF₃-CF₂-CF₂-CO-CF-(CF₃)₂ et (CF₃)₂-CF-CO-CF-(CF₃)₂, qui seront appelées plus simplement C7K dans ce qui suit ; et
- les fluorocétones de formule brute C₈F₁₆O et de formules semi-développées CF₃-CF₂-CF₂-CF₂-CO-CF₂-CF₂-CF₃, CF₃-CF₂-CF₂-CF₂-CO-CF-(CF₃)₂ et (CF₃)₂-CF-CF₂-CO-CF-(CF₃)₂, qui seront appelées plus simplement C8K dans ce qui suit.

Le gaz qui n'appartient pas à la famille des fluorocétones est, lui, de préférence choisi parmi les gaz qui présentent, d'une part, une température d'ébullition très basse, c'est-à-dire typiquement égale ou inférieure à -50°C à la pression standard, et, d'autre part, une rigidité diélectrique qui est au moins égale à celle que présente le dioxyde de carbone dans des conditions d'essai strictement identiques (même appareillage, même configuration géométrique, mêmes paramètres opératoires, ......) à celles utilisées pour mesurer la rigidité diélectrique dudit gaz.

De plus, on préfère que ce gaz ne soit pas toxique, c'est-à-dire qu'il ne soit pas classé parmi les substances considérées comme cancérigènes, mutagènes et/ou toxiques pour la reproduction par le Règlement (CE) n° 1272/2008 du Parlement Européen et du Conseil du 16 décembre 2008, et qu'il présente, par ailleurs, un PRG faible, c'est-à-dire typiquement égal ou inférieur à 500 et, mieux encore, égal ou inférieur à 10.

Des gaz qui présentent l'ensemble de ces propriétés sont, par exemple, l'air (PRG de 0), l'azote (PRG de 0), l'hélium (PRG de 0), le dioxyde de carbone (PRG de 1), l'oxygène (PRG de 0) et le protoxyde d'azote (PRG de 310).

Ainsi, des milieux gazeux susceptibles d'être utilisés dans l'appareil de coupure selon l'invention peuvent notamment consister en des mélanges composés d'une ou plusieurs des fluorocétones précédemment mentionnées et d'un ou plusieurs gaz choisis parmi l'air, l'azote, l'oxygène, l'hélium, le dioxyde de carbone et le protoxyde d'azote comme, par exemple, des mélanges C8K/air, C8K/N₂, C8K/O₂, C8K/CO₂, C7K/air, C7K/N₂, C7K/O₂, C7K/CO₂, C6K/air, C6K/N₂, C6K/O₂, C6K/CO₂, C5K/air, C5K/N₂, C5K/O₂, C5K/CO₂, C3K/C8K/air, C3K/C8K/N₂, C3K/C8K/O₂, C3K/C8K/CO₂, C3K/C7K/air, C3K/C7K/N₂, C3K/C7K/O₂, C3K/C7K/CO₂, C3K/C6K/air, C3K/C6K/N₂, C3K/C6K/O₂, C3K/C6K/CO₂, C4K/C6K/air, C4K/C6K/N₂, C4K/C6K/O₂, C4K/C6K/CO₂, C5K/C6K/air, C5K/C6K/N₂, C5K/C6K/O₂, C5K/C6K/CO₂, C3K/C5K/C6K/air, C3K/C5K/C6K/N₂, C3K/C5K/C6K/O₂, C3K/C5K/C6K/CO₂, C4K/C5K/C6K/air, C4K/C5K/C6K/N₂, C4K/C5K/C6K/O₂, C4K/C5K/C6K/CO₂, C6K/air/N2, C6K/air/CO₂, C6K/air/N₂O, C4K/C5K/N₂/O₂, C4K/C5K/He/O₂, C4K/C5K/CO_{2/}O₂, C4K/C5K/N₂O/O₂, C4K/C5K/air/N₂, C4K/C5K/air/He, C4K/C5K/air/CO₂, C4K/C5K/air/N₂O, C4K/C6K/N₂/O₂, C4K/C6K/He/O₂, C4K/C6K/CO₂/O₂, C4K/C6K/N₂O/O₂, C4K/C6K/air/N2, C4K/C6K/air/He, C4K/C6K/air/CO₂, C4K/C6K/air/N₂O, C5K/C6K/N₂/O₂, C5K/C6K/He/O₂, C5K/C6K/CO₂/O₂, C5K/C6K/N₂O/O₂, C5K/C6K/air/N₂, C5K/C6K/air/He, C5K/C6K/air/CO₂, C5K/C6K/air/N₂O, etc, étant entendu que toutes les combinaisons entre lesdites fluorocétones et lesdits gaz sont envisageables.

Le PRG global de ces mélanges est grossièrement en rapport des pressions partielles de chacun de leurs composants ou en rapport du pourcentage volumique de chacun de ces composants.

Parmi ces milieux gazeux, on préfère tout particulièrement ceux qui consistent en des mélanges de C4K, de C5K, de C6K et/ou de C7K et d'un ou plusieurs gaz choisis parmi l'azote, l'air et le dioxyde de carbone.

Quoi qu'il en soit, la fluorocétone ou la totalité des fluorocétones présentes dans le milieu gazeux représente au minimum 1% en volume du volume total de ce milieu et peut atteindre 100% volumiques en fonction de la ou des fluorocétones utilisées, de la tension assignée de l'appareil de coupure et des spécifications auxquelles cet appareil doit répondre.

Ainsi, par exemple, pour un appareil de coupure pour la haute tension, les proportions de fluorocétone(s) volumiques seront typiquement de 3 à 40% tandis que, pour un appareil de coupure pour la moyenne tension, elles seront généralement plus élevées, typiquement de 3 à 100%.

L'ionisation à l'état de plasma d'une fluorocétone conduit à la formation d'espèces moléculaires de plus petite masse moléculaire et, donc, de plus petite taille qu'elle. Aussi, les moyens pour absorber les espèces moléculaires qui se forment après l'ionisation que subit la fluorocétone au cours d'un arc électrique consistent, de préférence, en un ou plusieurs dispositifs comprenant un matériau solide et poreux capable d'absorber et de retenir dans ses pores uniquement des molécules qui présentent une taille inférieure à celle que présentent les molécules de cette fluorocétone. Un tel matériau peut notamment être de l'alumine activée, du charbon actif, un tamis moléculaire carboné (ou MSC pour « Molecular Sieve Carbon ») ou une zéolite.

L'invention a également pour objet un procédé de fabrication d'un appareil de coupure d'un courant électrique tel que précédemment défini, qui comprend une étape de remplissage d'une enceinte étanche, dans laquelle se trouvent des composants électriques, avec au moins une fluorocétone, seule ou en mélange avec au moins un gaz n'appartenant pas à la famille des fluorocétones, et qui est caractérisé en ce que cette étape de remplissage comprend successivement :
- la mise sous vide de l'enceinte ;
- le chauffage de cette enceinte à une température θ₁ supérieure à une température maximale d'utilisation de l'appareil ;
- l'injection de la fluorocétone, à l'état gazeux, dans l'enceinte jusqu'à ce que cette fluorocétone soit à une pression dans cette enceinte comprise entre la pression de vapeur saturante qu'elle présente à la température θ₁ et la pression de vapeur saturante qu'elle présente à ladite température maximale d'utilisation de l'appareil ;

- le refroidissement de l'enceinte à une température θ₂ inférieure à ladite température maximale d'utilisation de l'appareil ; et éventuellement
- l'injection du gaz n'appartenant pas à la famille des fluorocétones dans l'enceinte jusqu'à obtenir dans cette enceinte une pression totale (ou absolue) prédéterminée.

L'invention sera mieux comprise à la lecture du complément de description qui suit et qui se rapporte à un exemple de réalisation d'un appareil de coupure d'un courant électrique par le procédé selon l'invention.

Il va de soi, toutefois, que ce complément de description n'est donné qu'à titre d'illustration de l'objet de l'invention et ne constitue en aucune manière une limitation de cet objet.

### EXPOSÉ DÉTAILLÉ D'UN EXEMPLE DE REALISATION D'UN APPAREIL DE COUPURE SELON L'INVENTION

Le présent exemple se rapporte à la fabrication d'un appareil de coupure qui est destiné à être utilisé à une température n'excédant pas 80°C au niveau de sa paroi et dans lequel l'extinction des arcs électriques susceptibles de se produire est prévue pour être assurée par un milieu gazeux constitué de C6K et de CO₂ dans un rapport volumique de 10/90.

Cet appareil comprend, de manière connue en soi, une enceinte fermée, d'un volume de 10 L, et un certain nombre de composants électriques qui sont logés dans cette enceinte. Sont également logés dans cette enceinte des moyens propres à absorber les espèces moléculaires qui se forment après ionisation de C6K comme, par exemple, une zéolite du type de celles commercialisées par la société CECA sous la dénomination commerciale Siliporite™.

Pour remplir l'enceinte de C6K et de CO₂, on commence par faire le vide dans cette enceinte jusqu'à obtenir une pression résiduelle de l'ordre de 0,1 kPa (10⁻³ bar) dans cette enceinte.

Puis, on chauffe l'enceinte pour amener sa température interne à 40°C.

Tout en maintenant la température interne à cette valeur, on injecte le C6K, que l'on a préalablement chauffé à une température supérieure à son point d'ébullition (49°C sous pression normale) de manière à ce qu'il soit à l'état gazeux, dans l'enceinte par différence de pression et ce, jusqu'à ce que la pression du C6K dans l'enceinte soit de 73 kPa (0,73 bar).

On cesse de chauffer l'enceinte et on laisse sa température interne revenir à 20°C.

La pression de C6K dans l'enceinte chute alors à 33 kPa (0,33 bar) qui, comme visible sur le tableau 1 ci-après dans lequel sont indiquées les valeurs de pression de vapeur saturante (PVS) de C6K en fonction de la température, correspond à la PVS que présente cette fluorocétone à la température de 20°C, et la fraction de fluorocétone correspondant aux 40 kPa restants passe alors en phase liquide.

On injecte alors le CO₂ dans l'enceinte jusqu'à obtenir une pression totale dans cette enceinte de 330 kPa (3,3 bars).

C6K a un volume molaire de 22,4 L/mol à 0°C et 101,32 kPa (1 atm) et une masse moléculaire de 316 g/mol. Il est donc possible de déterminer la masse et le volume de la fraction de C6K qui est présente à l'état liquide dans l'enceinte, à savoir 53,3 g et 33 mL à 20°C.

A la température de 20°C, l'enceinte de l'appareil ainsi obtenu contient donc un milieu gazeux qui est soumis à une pression totale de 330 kPa (3,3 bars), qui est constitué d'un mélange de C6K et de CO₂ dans un rapport volumique de 10/90 et dans lequel la pression partielle de C6K est de 33 kPa (0,33 bar), ainsi que 33 mL de C6K à l'état liquide.

Ce milieu gazeux est propre à être utilisé comme milieu d'extinction d'arc électrique.

Lors de la survenue d'un arc électrique, une partie de la fraction de C6K, qui est présente à l'état gazeux dans l'enceinte, va être décomposée en espèces moléculaires de plus petite masse moléculaire et, donc, de plus petite taille qu'elle. Ceci va avoir pour effet d'augmenter la pression totale qui règne dans l'enceinte tout en abaissant la pression partielle de C6K au-dessous de sa PVS.

Les espèces moléculaires ainsi formées vont être piégées par le tamis moléculaire tandis qu'une partie de la fraction de C6K, qui est présente à l'état liquide dans l'enceinte, va passer en phase gazeuse, ce qui va avoir pour effet de ramener la pression partielle de C6K à une valeur égale à sa PVS (soit 33 kPa ou 0,33 bar à 20°C) et, le rapport volumique C6K/CO₂ à sa valeur d'origine.

Par ce mécanisme, le rapport volumique C6K/CO₂ peut être maintenu stable ou quasi stable, pour une température donnée, en dépit du nombre de coupures réalisées par l'appareil.

**Tableau 1**

| **Température** | **PVS** |
|---|---|
| 20°C | 33 kPa (0,33 bar) |
| 30°C | 50 kPa (0,50 bar) |
| 40°C | 73 kPa (0,73 bar) |
| 50°C | 104 kPa (1,04 bar) |
| 60°C | 145 kPa (1,45 bar) |
| 70°C | 197 kPa (1,97 bar) |
| 80°C | 262 kPa (2,62 bars) |
| 90°C | 343 kPa (3,43 bars) |
| 100°C | 442 kPa (4,42 bars) |

### REFERENCE CITEE

[1] Nakauchi et al., XVI International Conference on Gas Discharge and their Applications, Chine, 11-15 septembre 2006

## Revendications

1. Appareil de coupure d'un courant électrique de moyenne tension, qui comprend une enceinte étanche dans laquelle se trouvent des composants électriques ainsi qu'un milieu gazeux assurant l'extinction des arcs électriques susceptibles de se produire dans cette enceinte,
le milieu gazeux comprend au moins une fluorocétone, seule ou en mélange avec au moins un gaz n'appartenant pas à la famille des fluorocétones, et qui est **caractérisé en ce que** :
- la fluorocétone est présente dans l'enceinte partiellement à l'état liquide et partiellement à l'état gazeux ; et **en ce que**
- l'enceinte comprend de plus des moyens pour absorber les espèces moléculaires qui se forment après l'ionisation que subit cette fluorocétone au cours d'un arc électrique.

2. Appareil selon la revendication 1, **caractérisé en ce que** la fluorocétone est choisie parmi les fluorocétones ayant un nombre total d'atomes de carbone allant de 3 à 8 carbones et une ou plusieurs fonctions cétones.

3. Appareil selon la revendication 2, **caractérisé en ce que** la fluorocétone est choisie parmi les fluorocétones qui répondent à la formule brute CₙF₂ₙO dans laquelle n est un nombre entier allant de 3 à 8.

4. Appareil selon la revendication 3, dans lequel la fluorocétone est choisie parmi les fluorocétones qui répondent aux formules semi-développées ci-après :
CF₃-CO-CF₃
CF₃-CO-CF₂-CF₃
CF₃-CO-CF- (CF₃) ₂
CF₃-CF₂-CO-CF- (CF₃) ₂
CF₃-CF₂-CF₂-CO-CF₂-CF₂-CF₃
CF₃-CF₂-CF₂-CO-CF- (CF₃) ₂
(CF₃)₂-CF-CO-CF- (CF₃) ₂
CF₃-CF₂-CF₂-CF₂-CO-CF₂-CF₂-CF₃
CF₃-CF₂-CF₂-CF₂-CO-CF-(CF₃)₂, et
(CF₃) ₂-CF-CF₂-CO-CF-(CF₃) ₂.

5. Appareil selon l'une quelconque des revendications précédentes, **caractérisé en ce que** le gaz n'appartenant pas à la famille des fluorocétones est choisi parmi l'air, l'azote, l'oxygène, l'hélium, le dioxyde de carbone et le protoxyde d'azote.

6. Appareil selon la revendication 4 ou la revendication 5, **caractérisé en ce que** le milieu gazeux consiste en un mélange d'une ou plusieurs fluorocétones choisies parmi les fluorocétones qui répondent aux formules semi-développées ci-après :
CF₃-CO-CF₃
CF₃-CO-CF₂-CF₃
CF₃-CO-CF-(CF₃) ₂
CF₃-CF₂-CO-CF-(CF₃) ₂
CF₃-CF₂-CF₂-CO-CF₂-CF₂-CF₃
CF₃-CF₂-CF₂-CO-CF- (CF₃) ₂
(CF₃)₂-CF-CO-CF-(CF₃)₂, et
et d'un ou plusieurs gaz choisis parmi l'azote, l'air et le dioxyde de carbone.

7. Appareil selon l'une quelconque des revendications précédentes, **caractérisé en ce que** la fluorocétone ou la totalité dés fluorocétones présentes dans le milieu gazeux représente au moins 1% en volume du volume total de ce milieu.

8. Appareil selon l'une quelconque des revendications précédentes, **caractérisé en ce que** les moyens pour absorber les espèces moléculaires consistent en un ou plusieurs dispositifs comprenant de l'alumine activée, du charbon actif, un tamis moléculaire carboné et/ou une zéolite.

9. Appareil selon l'une quelconque des revendications précédentes, caractérisé en qu'il est un disjoncteur, un interrupteur, un sectionneur, un combiné interrupteur-fusibles, un sectionneur de mise à la terre ou un contacteur.

10. Procédé de fabrication d'un appareil de coupure d'un courant électrique de moyenne tension selon l'une quelconque des revendications 1 à 9, qui comprend une étape de remplissage d'une enceinte étanche, dans laquelle se trouvent des composants électriques, avec au moins une fluorocétone, seule ou en mélange avec au moins un gaz n'appartenant pas à la famille des fluorocétones, et qui est **caractérisé en ce que** cette étape de remplissage comprend successivement :
- la mise sous vide partiel de l'enceinte ;
- le chauffage de cette enceinte à une température θ₁ supérieure à une température maximale d'utilisation de l'appareil ;
- l'injection de la fluorocétone à l'état gazeux dans l'enceinte jusqu'à ce que cette fluorocétone soit à une pression dans cette enceinte comprise entre la pression de vapeur saturante qu'elle présente à la température θ₁ et la pression de vapeur saturante qu'elle présente à ladite température maximale d'utilisation de l'appareil ;
- le refroidissement de l'enceinte à une température θ₂ inférieure à ladite température maximale d'utilisation de l'appareil ; et éventuellement
- l'injection du gaz n'appartenant pas à la famille des fluorocétones dans l'enceinte jusqu'à obtenir dans l'enceinte une pression totale prédéterminée.

## Patentansprüche

1. Mittelspannungsschaltgerät, enthaltend ein dichtes Gehäuse, in welchem sich elektrische Bauteile sowie ein gasförmiges Medium zum Sicherstellen des Löschens von Lichtbögen, die in diesem Gehäuse auftreten können, befinden, wobei das gasförmige Medium zumindest ein Fluorketon allein oder als Gemisch mit zumindest einem Gas enthält, das nicht zur Familie der Fluorketone gehört,
und das **dadurch gekennzeichnet ist, dass**
- das Fluorketon in dem Gehäuse teilweise in flüssigem Zustand und teilweise in gasförmigem Zustand vorhanden ist, und dass
- das Gehäuse ferner Mittel aufweist, um molekulare Spezies zu absorbieren, die sich nach der lonisation bilden, der dieses Fluorketon während eines Lichtbogens ausgesetzt ist.

2. Gerät nach Anspruch 1,
**dadurch gekennzeichnet, dass**
das Fluorketon ausgewählt ist aus Fluorketonen mit einer Gesamtzahl von Kohlenstoffatomen von 3 bis 8 Kohlenstoffen und einer oder mehreren Ketonfunktionen.

3. Gerät nach Anspruch 2,
**dadurch gekennzeichnet, dass**
das Fluorketon ausgewählt ist aus Fluorketonen, die der Summenformel CₙF₂ₙO entsprechen, worin n eine ganze Zahl von 3 bis 8 ist.

4. Gerät nach Anspruch 3,
wobei
das Fluorketon ausgewählt ist aus Fluorketonen, die den nachfolgenden Halbstrukturformeln entsprechen:
CF₃ - CO - CF₃
CF₃ - CO - CF₂ - CF₃
CF₃ - CO - CF - (CF₃) ₂
CF₃ - CF₂ - CO - CF - (CF₃) ₂
CF₃ - CF₂ - CF₂ - CO - CF₂ - CF₂ - CF₃
CF₃ - CF₂ - CF₂ -CO - CF - (CF₃) ₂
(CF₃) ₂ - CF - CO - CF - (CF₃) ₂
CF₃ - CF₂ - CF₂ - CF₂ - CO - CF₂ - CF₂ - CF₃
CF₃ - CF₂ - CF₂ - CF₂ - CO - CF - (CF₃) ₂ und
(CF₃) ₂ - CF - CF₂ - CO - CF - (CF₃) ₂.

5. Gerät nach einem der vorangehenden Ansprüche,
**dadurch gekennzeichnet, dass**
das Gas, das nicht zur Familie der Fluorketone gehört, ausgewählt ist aus Luft, Stickstoff, Sauerstoff, Helium, Kohlendioxid und Distickstoffmonoxid.

6. Gerät nach Anspruch 4 oder Anspruch 5,
**dadurch gekennzeichnet, dass**
das gasförmige Medium aus einem Gemisch eines oder mehrerer Fluorketone besteht, ausgewählt aus Fluorketonen, die den nachfolgenden Halbstrukturformeln entsprechen:
CF₃ - CO - CF₃
CF₃ - CO - CF₂ - CF₃
CF₃ - CO - CF - (CF₃) ₂
CF₃ - CF₂ - CO - CF - (CF₃) ₂
CF₃ - CF₂ - CF₂ - CO - CF₂ - CF₂ - CF₃
CF₃ - CF₂ - CF₂ -CO - CF - (CF₃) ₂
(CF₃) ₂ - CF - CO - CF - (CF₃) ₂ und
einem oder mehreren Gasen, ausgewählt aus Stickstoff, Luft und Kohlendioxid.

7. Gerät nach einem der vorangehenden Ansprüche,
**dadurch gekennzeichnet, dass**
das Fluorketon bzw. die Gesamtheit der in dem gasförmigen Medium vorhandenen Fluorketone zumindest 1 Vol.-% des Gesamtvolumens dieses Mediums darstellt.

8. Gerät nach einem der vorangehenden Ansprüche,
**dadurch gekennzeichnet, dass**
die Mittel zum Absorbieren der molekularen Spezies aus einer oder mehreren Vorrichtungen bestehen, die aktiviertes Aluminiumoxid, Aktivkohle, ein kohlenstoffhaltiges Molekularsieb und/oder einen Zeolith enthalten.

9. Gerät nach einem der vorangehenden Ansprüche,
**dadurch gekennzeichnet, dass**
es ein Leistungsschutzschalter, ein Lastschalter, ein Trennschalter, eine Lastschalter-Sicherungs-Kombination, ein Erdungs-Trennschalter oder ein Schütz ist.

10. Verfahren zum Herstellen eines Mittelspannungsschaltgeräts nach einem der Ansprüche 1 bis 9, das einen Schritt zum Befüllen eines dichten Gehäuses, in welchem sich elektrische Bauteile befinden, mit zumindest einem Fluorketon allein oder als Gemisch mit zumindest einem Gas umfasst, das nicht zur Familie der Fluorketone gehört,
und das **dadurch gekennzeichnet ist,dass**
dieser Schritt des Befüllens nacheinander umfasst:
- Erzeugen eines Teilvakuums im Gehäuse;
- Erwärmen dieses Gehäuses auf eine Temperatur θ₁ höher als eine maximale Anwendungstemperatur des Geräts;
- Einspritzen des Fluorketons in gasförmigem Zustand in das Gehäuse, bis dieses Fluorketon einen Druck in diesem Gehäuse hat, der zwischen dem Sättigungsdampfdruck, den es bei der Temperatur θ₁ aufweist, und dem Sättigungsdampfdruck liegt, den es bei der maximalen Anwendungstemperatur des Geräts aufweist;
- Abkühlen des Gehäuses auf eine Temperatur θ₂ niedriger als die maximale Anwendungstemperatur des Geräts; und gegebenenfalls
- Einspritzen von Gas, das nicht zur Familie der Fluorketone gehört, in das Gehäuse, bis in dem Gehäuse ein vorbestimmter Gesamtdruck erreicht ist.

## Claims

1. Switchgear for breaking a medium-voltage electric current, which switchgear comprises a leaktight enclosure in which electrical components are found as well as a gaseous medium for extinguishing the electric arcs likely to occur in said enclosure, the gaseous medium comprises at least one fluoroketone alone or in a mixture with at least one gas that does not form part of the fluoroketone family; and which is **characterized in that**:
- the fluoroketone is present in the enclosure in part in the liquid state and in part in the gaseous state; and **in that**
- the enclosure further comprises means for absorbing molecular species that form after the ionization experienced by said fluoroketone during arcing.

2. Switchgear according to claim 1, **characterized in that** the fluoroketone is selected from fluoroketones having a total number of carbon atoms lying in the range 3 to 8 carbon atoms and having one or more ketone functions.

3. Switchgear according to claim 2, **characterized in that** the fluoroketone is selected from the fluoroketones that satisfy the empirical formula CₙF₂ₙO in which n is an integer lying in the range 3 to 8.

4. Switchgear according to claim 3, in which the fluoroketone is selected from the fluoroketones that satisfy the semi-structural formulae below:
CF₃-CO-CF₃
CF₃-CO-CF₂-CF₃
CF₃-CO-CF-(CF₃)₂
CF₃-CF₂-CO-CF-(CF₃)₂
CF₃-CF₂-CF₂-CO-CF₂-CF₂-CF₃
CF₃-CF₂-CF₂-CO-CF-(CF₃)₂
(CF₃)₂-CF-CO-CF-(CF₃)₂
CF₃-CF₂-CF₂-CF₂-CO-CF₂-CF₂-CF₃
CF₃-CF₂-CF₂-CF₂-CO-CF-(CF₃)₂; and
(CF₃)₂-CF-CF₂-CO-CF-(CF₃)₂.

5. Switchgear according to any preceding claim, **characterized in that** the gas that does not form part of the fluoroketone family is selected from air, nitrogen, oxygen, helium, carbon dioxide and nitrous oxide.

6. Switchgear according to claim 4 or claim 5, **characterized in that** the gaseous medium consists of a mixture of one or more fluoroketones selected from fluoroketones that satisfy the semi-structural formulae below:
CF₃-CO-CF₃
CF₃-CO-CF₂-CF₃
CF₃-CO-CF-(CF₃)₂
CF₃-CF₂-CO-CF-(CF₃)₂
CF₃-CF₂-CF₂-CO-CF₂-CF₂-CF₃
CF₃-CF₂-CF₂-CO-CF-(CF₃)₂
(CF₃)₂-CF-CO-CF-(CF₃)₂; and
one or more gases selected from nitrogen, air and carbon dioxide.

7. Switchgear according to any preceding claim, **characterized in that** the fluoroketone or the totality of the fluoroketones present in the gaseous medium represents at least 1% by volume of the total volume of said medium.

8. Switchgear according to any preceding claim, **characterized in that** the means for absorbing the molecular species consist of one or more devices comprising activated alumina, or activated carbon, a molecular sieve carbon and/or a zeolite.

9. Switchgear according to any preceding claim, **characterized in that** it is an electrical transformer, a line for transporting or distributing electricity, a set of busbars, a circuit breaker, a switch, a disconnector, a unit combining a switch with fuses, a grounding switch or a contactor.

10. A method of manufacturing a switchgear for breaking a medium-voltage electric current according to any one of claims 1 to 9, which includes a step of filling a leaktight enclosure, in which electrical components are found, with at least one fluoroketone, alone or in a mixture with at least one gas that does not form part of the fluoroketone family, and which is **characterized in that** said filling step includes in succession:
- forming a partial vacuum in the enclosure;
- heating said enclosure to a temperature θ₁ that is greater than a maximum temperature for using the switchgear;
- injecting the fluoroketone in the gaseous state into the enclosure until said fluoroketone in said enclosure reaches a pressure between the saturated vapor pressure it presents at the temperature θ₁ and the saturated vapor pressure it presents at said maximum temperature for using the switchgear;
- cooling the enclosure to a temperature θ₂ that is less than said maximum temperature for using the switchgear; and possibly
- injecting the gas that does not form part of the fluoroketone family into the enclosure until a predetermined total pressure is reached in the enclosure.
